# EUROPEAN PATENT SPECIFICATION

(11) **EP 3 708 450 B1**
(45) Date of publication and mention of the grant of the patent: **13.04.2022**
(21) Application number: 19162246.3
(22) Date of filing: 12.03.2019
(51) Int. Cl.: B60W 10/06, B60W 10/184, B60W 30/02, B60W 50/00

(54) **METHOD AND SYSTEM FOR CONTROLLING THE PITCHING OF A MOTOR VEHICLE**
VERFAHREN UND SYSTEM ZUR STEUERUNG DES NICKENS EINES KRAFTFAHRZEUGS
PROCÉDÉ ET SYSTÈME DE RÉGLAGE DU TANGAGE D'UN VÉHICULE À MOTEUR

(43) Date of publication of application: 16.09.2020
(73) Proprietor: C.R.F. Società Consortile per Azioni, 10043 Orbassano (Torino) (IT)
(72) Inventor: GABIATI, Mr. Giovanni, I-10043 Orbassano (Torino) (IT); GRILLO, Mr. Massimo, I-10043 Orbassano (Torino) (IT); IELUZZI, Mr. Michele, I-10043 Orbassano (Torino) (IT); PARAVIZZINI, Mr. Pier Paolo, I-10043 Orbassano (Torino) (IT); POERIO, Mr. Nicola, I-10043 Orbassano (Torino) (IT); RAFFONE, Enrico, I-10043 Orbassano (Torino) (IT)
(74) Representative: Buzzi, Franco

(56) References cited:
- EP-A1- 2 418 401
- CN-A- 108 099 897
- DE-A1-102016 214 547
- US-A1- 2013 245 888
- US-A1- 2014 163 836

## Description

### Field of the invention

The present invention generally regards the control of the balance of a motor vehicle and more in particular it regards the correction of the pitching motion to which a moving vehicle is subjected when overcoming the unevenness of the road.

Typically, the unevenness could for example consist of a so-called speed bumps or speed reducers consisting of a bump arranged transversely to the direction of travel and having the function of slowing down the speed in urban areas. Other unevenness could for example consist in ditches on the road bed or in reliefs and depressions that could form, even naturally, along untarmacked roads.

When travelling through unevenness of this kind, the vehicle, and more precisely its suspended mass, is subjected to more or less sudden and intense jolts obviously depending on the disparity with respect to the road surface and the vehicle advancement speed.

It is thus desirable to be able to compensate and reduce the pitching motion to which the vehicle is subjected under such circumstances, with the aim of improving the comfort for the occupants thereof.

### State of the art

Documents EP2808214 A1 and EP2829424 A1 reveal solutions for correcting the balance of the suspended mass of the vehicle depending on the pitching, as well as other unwanted movements. The solution proposed in these documents essentially consists in monitoring the speed variations of the wheels of the vehicle due to impact with the road unevenness and in thus correcting the balance of the suspended mass both with possible variation of the speed of the vehicle (acceleration or deceleration) and acting on the damping features of the shock absorbers, which - to this end - must be provided with special devices for varying the degree of damping.

Thus, this prior art technique of the reactive type, given that the correction of the balance occurs upon the impact of the wheels of the vehicle with the road unevenness, which thus entails functional difficulties in terms of obtaining an almost instantaneous correction. Two threshold values, one smaller than the other, of the monitored quantity are set: below the lower threshold the system reacts with the acceleration of the engine and thus of the vehicle, while above the upper threshold values the system reacts with a braking of the vehicle. As concerns values comprised between the lower threshold and the upper threshold the system reacts by changing the damping effect of the shock absorbers. Thus, besides the aforementioned functional difficult, there is also the further complication regarding the need to equip the vehicle with variable damping shock absorbers.

DE102016214547A1 **discloses damping a pitch movement of a vehicle caused by unevenness of the travelled ground which is carried out after a pitch motion of the chassis of the vehicle has been detected by means of a sensor configured to sense velocities or accelerations in the vertical direction or angular velocities or accelerations about the pitch axis. Detection of the pitching motion is then communicated to a control device acting on the wheel braking system of the vehicle, so as to damp or attenuate the pitching motion by braking the vehicle wheels resting on the ground. Such a damping device can be provided as part of the vehicle dynamics or stability system, and in order to maintain the vehicle speed unchanged when braking is performed the drive torque can optionally compensate for the braking torque: accordingly, braking torque and driving torque would be applied together at the same time. At any rate the pitching motion is being dampened only when the vehicle is already travelling over the road unevenness, i.e. with a shorter or longer delay depending upon the vehicle speed. In order to reduce such a delay in one embodiment an ambient camera is provided to deliver image recordings through which the pitch motion detection device can be warned in advance. Even in this case damping the pitch motion is still based on the detected velocities or accelerations in the vertical direction or about the pitch axis at the time the vehicle is travelling along the road unevenness.**

### Summary of the invention

The object of the present invention is to overcome the drawbacks of the prior art, and providing a method for controlling the pitching motion of a motor vehicle when overcoming an uneven road that is simpler but simultaneously not less effective with respect to the known aforementioned methods, without entailing the need to act on the damping features of the shock absorbers.

According to the distinctive characteristic of the invention, the method for controlling the balance of a moving vehicle, whose pitching - when overcoming an uneven road - is corrected by means of accelerations and/or decelerations, lies in the fact that the unevenness profile is detected by monitoring the road ahead of the moving vehicle and the pitching motion is predictively corrected based on such monitoring.

The distinctiveness of the predictive control instead of the reactive control of the method according to the invention makes the control of the balance considerably easier and extremely effective at the same time.

According to the invention the vehicle is equipped with a front video camera configured to monitor the road of the vehicle and for detecting the unevenness of such road, and the method comprises the following operations:
- processing the video shots made by the video camera for determining the detected unevenness profile and estimate the level of pitching of the vehicle provided based on the advancement speed thereof,
- controlling, even before overcoming the unevenness, a sequence of accelerations and decelerations of the vehicle as a function of the profile thus determined and the speed of the vehicle, so as to reduce the pitching motion thereof.

The invention also regards a control system according to claim 3 for the implementation of the method, which is configured to detect the unevenness by monitoring the road ahead of the moving vehicle and for predictively correcting the pitching motion based on such monitoring.

### Brief description of the drawings

The invention will now be described in detail with reference to the attached drawings, provided purely by way of non-limiting example, wherein:
- figure 1 is a schematic view showing a motor vehicle configured for implementing the method according to the invention, and
- figure 2 is a block diagram exemplifying the components of the system for implementing the control method.

### Detailed description of the invention

The distinctive feature of the control method and system according to the invention lies, as previously mentioned, in the fact that the correction of the pitching motion of a motor vehicle A when overcoming an unevenness B of the road R, typically a speed reducer, is predictively corrected by monitoring the level of unevenness, by estimating the expected pitching of the vehicle and thus correcting it by means of a sequence of accelerations and decelerations, i.e. by acting solely on the engine and possibly on the braking system of the vehicle without requiring the use of auxiliary devices for example applied to the shock absorbers of the vehicle wheels.

In order to monitor the unevenness B, the vehicle A is equipped, according to the invention, with a video camera C positioned frontally or at an area such to be able to view and film the road R ahead of the moving vehicle.

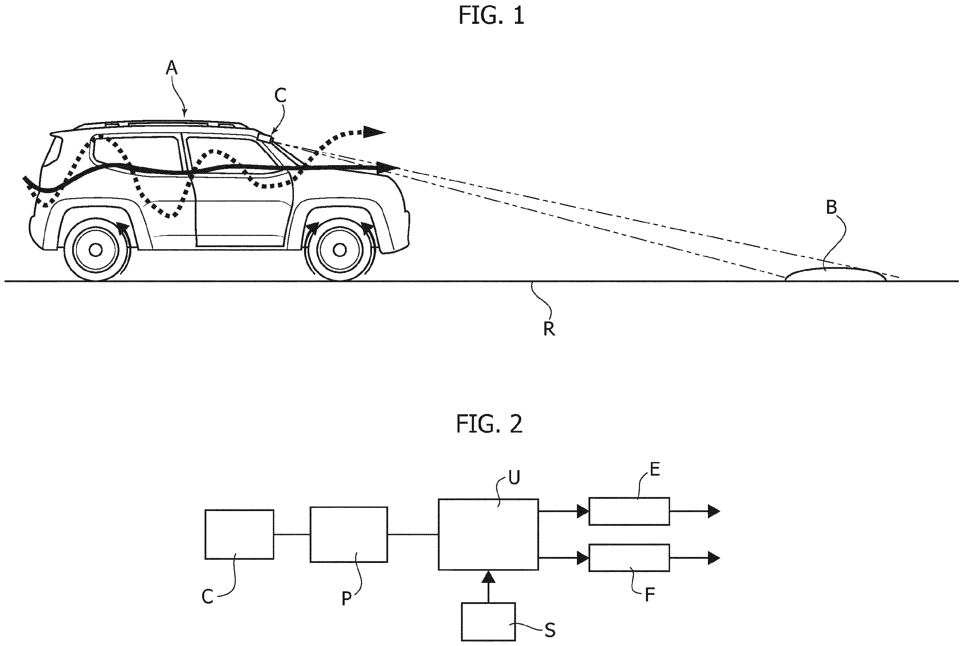

With reference to figure 2, in the control system according to the invention the signals coming from the video camera C are processed by means of an image processor P to determine the unevenness characteristics, in particular in terms of the profile of the surface of the road R. The processor P is operatively connected to a control unit U with which the vehicle A is normally provided, in turn connected to a speed sensor S which detects the advancement speed of the motor vehicle and to an engine control unit E as well as to a braking system control unit F for the wheels of the vehicle A.

In use, through the images taken by the video camera C, the processor P estimates the profile or geometry of the unevenness B and the level of pitching of the vehicle A predicted depending on the advancement speed thereof. Thus, the control unit U acts on the engine control unit E and possibly on the braking system control unit F to impart to the motor vehicle A, even before overcoming the unevenness (B), a short sequence of accelerations and/or decelerations or brakings as a function of the detected unevenness profile B and the advancement speed thereof. Once the motor vehicle A overcomes the unevenness B it will thus be subjected to a short and almost instantaneous sequence of decelerations and accelerations depending on the unevenness profile B. In this manner, the pitching motion of the motor vehicle A when overcoming the unevenness B is corrected and reduced by an amount such to ensure to the occupants of the motor vehicle A a better driving comfort when overcoming obstacles such as, as mentioned, speed bumps and as well as ditches, portholes naturally uneven and bumpy paths along untarmacked roads. The lines respectively represented as dashed and solid in figure 1 schematically and qualitatively represent the pitching oscillations of the motor vehicle A upon overcoming the unevenness B respectively without control and with the control operated according to the invention.

Obviously, the construction details and the embodiments of the control system according to the invention may widely vary with respect to what has been described and illustrated, without departing from the scope of protection of the present invention as defined in the claims that follow.

## Claims

1. Method for controlling the balance of a moving motor vehicle (A) whose pitching when overcoming the unevenness (B) of the road (R) is corrected by means of accelerations and/or decelerations of the vehicle by a value correlated to the level of unevenness (B), wherein the unevenness profile is detected by monitoring the road (R) ahead of the moving vehicle and the pitching motion is predictively corrected based on such monitoring, wherein the vehicle (A) is equipped with a video camera (C) configured to monitor the road (R) and for detecting the unevenness (B) of such road (R), the method being **characterised in that** it comprises the following operations:
- processing the video shots made by said video camera (C) for determining the detected unevenness profile and estimate the level of pitching of the vehicle provided based on the advancement speed (A) thereof,
- controlling, even before overcoming the unevenness (B), a sequence of decelerations and accelerations of the vehicle (A) as a function of the profile thus determined and the speed of the vehicle, so as to reduce the pitching thereof.

2. Method according to claim 1, **characterised in that** the vehicle (A) is decelerated or accelerated based on the unevenness profile (B).

3. System for controlling the balance of a moving motor vehicle (A) when overcoming the unevenness (B) of the road (R) by means of an acceleration and/or a deceleration of the vehicle by a value correlated to the level of unevenness (B), said system being configured to detect the unevenness (B) by monitoring the road (R) ahead of the moving vehicle and predictively correcting the pitching motion thereof based on such monitoring, and wherein the vehicle comprises an engine, a braking system, an engine control unit (E) and a braking system control unit (F), the system comprising a video camera (C) applicable to the vehicle (A) to monitor the road (R) and detect unevenness (B), and a processing unit (P, U) operatively connected to said video camera (C), to the engine control unit (E) and to the braking system control unit (F), the system being **characterised by** being configured to determine the unevenness profile (B) detected by the video camera (C) and control, even before overcoming the unevenness (B), a sequence of decelerations and accelerations of the vehicle (A) as a function of the profile thus determined and the speed of the vehicle, so as to reduce the pitching motion thereof.

4. Motor vehicle provided with a control system according to claim 3.

## Patentansprüche

1. Verfahren zur Steuerung der Ausgeglichenheit eines sich bewegenden Kraftfahrzeugs (A), dessen Nickbewegung beim Überwinden der Unebenheit (B) der Straße (R) mittels Beschleunigungen und/oder Verzögerungen des Fahrzeugs durch einen Wert korrigiert werden, der zum Grad der Unebenheit (B) korreliert ist, wobei das Unebenheitsprofil durch Überwachen der Straße (R) vor dem sich bewegenden Fahrzeug detektiert wird und die Nickbewegung voraussagend auf der Basis dieser Überwachung korrigiert wird, wobei das Fahrzeug (A) ausgerüstet ist mit einer Videokamera (C), die gestaltet ist, um die Straße (R) zu überwachen und zum Detektieren der Unebenheit (B) einer solchen Straße (R), wobei das Verfahren **dadurch gekennzeichnet ist, dass** es die folgenden Operationen umfasst:
- Verarbeiten der durch die Videokamera (C) gemachten Videoaufnahmen zum Bestimmen des detektierten Unebenheitsprofils und Bewerten des Grades der Nickbewegung des Fahrzeugs, der auf der Basis der Fortschrittsgeschwindigkeit (A) desselben bereitgestellt wird,
- Steuern, auch vor dem Überwinden der Unebenheit (B), einer Folge von Verzögerungen und Beschleunigungen des Fahrzeugs (A) als eine Funktion des so bestimmten Profils und der Geschwindigkeit des Fahrzeugs, um die Nickbewegung desselben zu verringern.

2. Verfahrene Anspruch 1, **dadurch gekennzeichnet, dass** das Fahrzeug (A) auf der Basis des Unebenheitsprofils (B) verzögert oder beschleunigt wird.

3. System zur Steuerung der Ausgeglichenheit eines sich bewegenden Kraftfahrzeugs (A), wenn die Unebenheit (B) der Straße (R) überwunden wird, mittels Beschleunigung und/oder Verzögerung des Fahrzeugs durch einen Wert, der zum Grad der Unebenheit (B) korreliert ist, wobei das System gestaltet ist, die Unebenheit (B) durch Überwachung der Straße (R) vor dem sich bewegenden Fahrzeug zu detektieren und voraussagend Nickbewegung desselben auf der Basis dieser Überwachung zu korrigieren, und wobei das Fahrzeug einen Motor, ein Bremssystem eine Motorsteuereinheit (E) und eine Bremssystemsteuereinheit (F) umfasst, wobei das System aus einer Videokamera (C) besteht, die für das Fahrzeug (A) anwendbar ist, um die Straße (R) zu überwachen und eine Unebenheit (B) zu detektieren, und eine Verarbeitungseinheit (P, U), die funktionsfähig mit der Videokamera (C), mit der Motorsteuereinheit) (E) und mit der Bremssystemsteuereinheit (F) verbunden ist, wobei das System **dadurch gekennzeichnet ist, dass** es ausgelegt ist, das durch die Videokamera (C) detektierte Unebenheitsprofil (B) zu bestimmen und, auch vor dem Überwinden der Unebenheit (B), eine Folge von Verzögerungen und Beschleunigungen des Fahrzeugs (A) als eine Funktion des so bestimmten Profils und der Geschwindigkeit des Fahrzeugs zu steuern, um die Nickbewegung desselben zu verringern.

4. Kraftfahrzeug, das mit einem Steuerungssystem gemäß Anspruch 3 versehen ist.

## Revendications

1. Procédé pour commander l'équilibre d'un véhicule automobile en déplacement (A) dont le tangage lors du dépassement de l'irrégularité (B) de la route (R) est corrigé au moyen d'accélérations et/ou de décélérations du véhicule par une valeur corrélée au niveau d'irrégularité (B), dans lequel le profil d'irrégularité est détecté en surveillant la route (R) devant le véhicule en déplacement et le mouvement de tangage est corrigé de manière prédictive sur la base d'une telle surveillance, dans lequel le véhicule (A) est équipé d'une caméra vidéo (C) configurée pour surveiller la route (R) et pour détecter l'irrégularité (B) d'une telle route (R), le procédé est **caractérisé en ce qu'**il comprend les opérations suivantes :
- le traitement des séquences vidéo réalisées par ladite caméra vidéo (C) pour déterminer le profil d'irrégularité détecté et estimer le niveau de tangage du véhicule fourni sur la base de sa vitesse d'avancement (A),
- la commande, même avant de dépasser l'irrégularité (B), d'une série de décélérations et d'accélérations du véhicule (A) en fonction du profil ainsi déterminé et de la vitesse du véhicule, de manière à réduire son tangage.

2. Procédé selon la revendication 1, **caractérisé en ce que** le véhicule (A) est décéléré ou accélère sur la base du profil d'irrégularité (B).

3. Système pour commander l'équilibre d'un véhicule automobile en déplacement (A) lors du dépassement de l'irrégularité (B) de la route (R) au moyen d'une accélération et/ou d'une décélération du véhicule par une valeur corrélée au niveau d'irrégularité (B), ledit système étant configuré pour détecter l'irrégularité (B) en surveillant la route (R) devant le véhicule en déplacement et corriger de manière prédictive son mouvement de tangage sur la base d'une telle surveillance, et dans lequel le véhicule comprend un moteur, un système de freinage, une unité de commande du moteur (E) et une unité de commande du système de freinage (F), le système comprenant une caméra vidéo (C) applicable au véhicule (A) pour surveiller la route (R) et détecter l'irrégularité (B), et une unité de traitement (P, U) reliée de manière fonctionnelle à ladite caméra vidéo (C), à l'unité de commande du moteur (E) et à l'unité de commande du système de freinage (F), le système étant **caractérisé en ce qu'**il est configuré pour déterminer le profil d'irrégularité (B) détecté par la caméra vidéo (C) et commander, même avant de dépasser l'irrégularité (B), une série de décélérations et d'accélérations du véhicule (A) en fonction du profil ainsi déterminé et de la vitesse du véhicule, de manière à réduire son mouvement de tangage.

4. Véhicule automobile muni d'un système de commande selon la revendication 3.
